# FASCICULE DE BREVET EUROPEEN

(11) **EP 0 998 105 B1**
(45) Date de publication et mention de la délivrance du brevet: **19.01.2005**
(21) Numéro de dépôt: 99402676.3
(22) Date de dépôt: 27.10.1999
(51) Int. Cl.: H04M 1/72, H04M 19/04

(54) **Procédé de sonnerie d'un téléphone mobile**
Klingelverfahren eines mobilen Telefonapparats
Mobile telephone ringing method

(30) Priorité: 27.10.1998 FR 9813417
(43) Date de publication de la demande: 03.05.2000
(73) Titulaire: SAGEM SA, 75015 Paris (FR)
(72) Inventeur: Dimech, Jean Marc M., 95000 Cergy (FR)
(74) Mandataire: Schmit, Christian Norbert Marie

(56) Documents cités:
- EP-A- 0 772 334
- DE-A- 19 543 365
- GB-A- 2 308 785
- GB-A- 2 313 978
- US-A- 4 523 058

## Description

La présente invention a pour objet un procédé de sonnerie d'un téléphone mobile. Le but de l'invention est de protéger un utilisateur contre toute sonnerie intempestive du téléphone mobile. La protection de l'invention est d'autant plus efficace que le moyen utilisé pour produire la sonnerie est proche d'une oreille de l'utilisateur. En effet, plus le moyen utilisé est près de l'oreille et plus une sonnerie intempestive présentera des risques. A cet effet l'invention vise en particulier le cas où l'organe de sonnerie du téléphone mobile est un haut-parleur d'oreille de ce téléphone mobile. Néanmoins, l'invention est aussi utile si cet organe n'est pas le haut-parleur d'oreille.

Actuellement, les moyens de sonnerie utilisés pour les téléphones mobiles sont principalement au nombre de deux. Un premier moyen comporte des circuits céramiques résonateurs. Ces résonateurs prennent place en général dans la partie inférieure d'un téléphone mobile. Dans la partie supérieure se trouve le haut-parleur du téléphone mobile. Un autre moyen de sonnerie consiste à utiliser directement le haut-parleur du téléphone mobile. Ainsi, l'utilisation du haut-parleur comme moyen de sonnerie rend l'utilisation d'un résonateur inutile. On crée ainsi une économie de composants dans la construction d'un téléphone mobile, ce qui en diminue le coût.

L'utilisation d'un haut-parleur comme moyen de diffusion d'un signal de sonnerie présente cependant des problèmes. En effet, il se peut qu'un utilisateur ait un téléphone proche de son oreille et reçoive un appel dans le même temps. Cet appel va déclencher un signal de sonnerie ressenti brutalement par l'utilisateur. Ce cas peut se produire par exemple lorsque l'utilisateur compose un numéro et place immédiatement le téléphone mobile à proximité de son oreille, par exemple avant d'avoir validé le numéro ou alors que la validation entreprise n'a pas eu lieu complètement. Dans ce cas, le téléphone peut encore sonner et donc produire un signal de sonnerie assez fort directement dans l'oreille de l'utilisateur si la sonnerie est diffusée par le haut-parleur. Ainsi selon les caractéristiques de l'oreille de l'utilisateur le signal de sonnerie peut occasionner des troubles physiologiques plus ou moins gênants pour celui-ci. Ces troubles peuvent être par exemple une perte momentanée des capacités auditives de l'oreille concernée. Ces troubles sont d'autant plus graves que l'utilisateur peut téléphoner en conduisant un véhicule. Il peut en perdre le contrôle. La sonnerie est ressentie moins brutalement si elle est produite par le résonateur. Mais le trouble, ou la surprise, sont quand même présents.

Pour résoudre ce problème, il est déjà proposé une solution. Dans cette solution on place un détecteur à côté du haut-parleur. Ce détecteur a pour objet de détecter un obstacle à proximité du haut-parleur. Cet obstacle est généralement une tête. Ainsi, lorsqu'une tête est détectée, elle est considérée comme proche du haut-parleur. Dès lors un processus est mis en oeuvre afin d'empêcher la sonnerie du téléphone mobile ou de limiter la puissance du signal acoustique tant que le téléphone mobile est à proximité d'une oreille. La technologie habituellement employée pour cette détection est de type infrarouge. Les composants nécessaires pour la mettre en oeuvre augmentent le coût des téléphones mobiles. C'est pourquoi cette solution n'est utitisée que dans des téléphones haut de gamme.

Le document US 4 523 058 décrit un procédé de sonnerie dans un téléphone mobile, selon lequel l'amplitude du signal de sonnerie croît à partir d'une amplitude nulle jusqu'à son amplitude nominale. Mais en faisant croître l'amplitude du signal à partir de zéro on utilise inutilement la partie du temps de croissance où l'amplitude est inférieure au seuil d'audibilité et on n'entend pas la sonnerie. Ainsi, il en résulte que le temps de réaction laissé n'est pas suffisant.

L'invention a pour objet de remédier aux problèmes cités en proposant un procédé de sonnerie dans lequel l'amplitude d'un signal acoustique continu sera croissante pendant une durée plus longue qu'une durée de réaction humaine. Cette croissance de l'amplitude du signal acoustique permet, pour émettre un signal de sonnerie, de partir d'un niveau d'amplitude d'un signal acoustique faible ou nul et d'aboutir à un niveau plus élevé. De préférence ce niveau plus élevé est un niveau sélectionné par l'utilisateur. En effet, un utilisateur peut sélectionner lui-même un niveau élevé d'amplitude pour le signal acoustique de sonnerie parmi un certain nombre de niveaux prédéfinis par un constructeur. Dans l'invention, en partant d'un niveau plus faible, et de préférence inoffensif, on laisse le temps à l'utilisateur d'écarter le haut-parleur de son oreille. Cet écart réflexe se produit avant que le signal acoustique n'ait atteint le niveau maximal pour lequel il a été réglé par l'utilisateur. Ce niveau maximal est un niveau qui pourrait être dangereux pour l'utilisateur s'il était appliqué directement à son oreille. Dans l'invention, on sollicite donc l'utilisateur pour qu'il se protège lui-même.

L'invention concerne donc un procédé de sonnerie d'un téléphone mobile comportant les étapes suivantes :
- on synthétise, à partir d'une suite d'informations, un signal analogique,
- on transforme le signal analogique en un signal acoustique continu de sonnerie,
caractérisé en ce que
- on fait croître une amplitude du signal acoustique continu pendant une durée de croissance plus longue qu'une durée de réaction humaine.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une représentation d'un moyen de production d'un signal de sonnerie selon l'invention ;
- Figure 2a : une représentation de l'évolution de l'amplitude d'un signal acoustique selon l'invention en fonction du temps ;
- Figure 2b : une représentation de l'éloignement du téléphone mobile par rapport à l'oreille de l'utilisateur en fonction du temps ;
- Figure 3: une représentation de l'évolution temporelle d'une amplitude crête d'un signal de sonnerie, en fonction d'une loi particulière de variation choisie, par l'utilisateur, parmi différentes lois de variation disponibles dans le téléphone mobile.

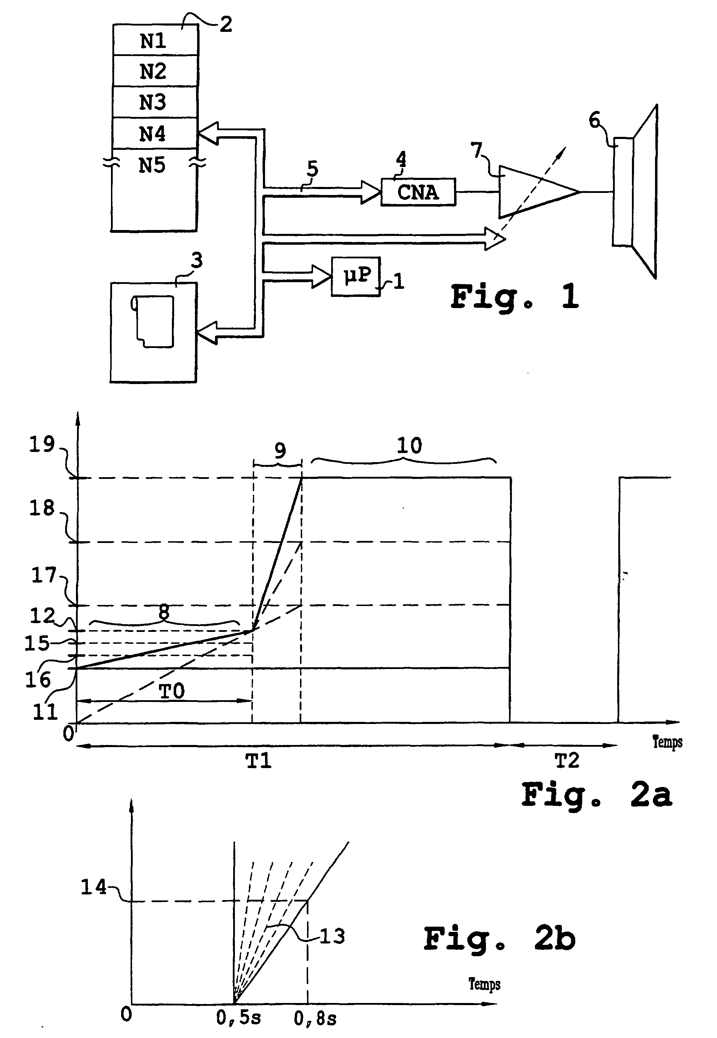

La figure 1 montre un moyen de production d'un signal de sonnerie selon l'invention. Dans une version préférée, ce moyen de production comporte un synthétiseur. Le synthétiseur comporte un microprocesseur 1 qui est commandé par un programme se trouvant dans une mémoire de programme 3. Ce programme utilise des données N1, N2, N3, et N4 disponibles dans une mémoire de données 2. La mémoire de programme 3, la mémoire de données 2, et le microprocesseur 1 sont de préférences ceux d'un téléphone mobile (non représenté) avec lequel on met en oeuvre le procédé de l'invention. Les données de la mémoire 2 sont notamment celles prédéfinies par un constructeur. Elles déterminent l'évolution que l'amplitude crête d'un signal acoustique continu pourra avoir au cours du temps. Notamment cette amplitude crête, dans l'état de la technique, est constante pour un signal acoustique continu. Un signal acoustique continu est un signal dans lequel des excitations sonores sont continues, par exemple une vibration constante, ou en un rythme très rapide. Dans ce dernier cas, les excitations sonores sont espacées par des silences suffisamment courts pour que l'on n'ait pas le temps d'individualiser ces excitations sonores (en pratique, on n'arrive pas à les compter). Les silences courts sont définis comme étant des excitations ou des absences d'excitation qu'une oreille aux capacités auditives moyennes ne peut pas détecter.

Le programme de la mémoire 3 calcule des valeurs binaires équivalentes à une amplitude instantanée du signal acoustique. Ces valeurs sont calculées suivant une loi de progression définie dans le programme contenu dans la mémoire de programmes 3. La fréquence de calcul des différentes amplitudes instantanées est par exemple de 8 KHz. Cette loi représente en fait la musique jouée par la sonnerie. Cette musique est, par exemple dans le cas d'une vibration monofréquence, représentée par une amplitude instantanée variant, par exemple, comme une sinusoïde. Une fois calculées, ces valeurs binaires sont appliquées, par le microprocesseur 1, à un convertisseur numérique analogique 4 par l'intermédiaire d'un bus 5. Le convertisseur convertit les amplitudes instantanées au rythme de leur calcul. Le bus 5 est essentiellement un bus de données sur lequel transitent les valeurs binaires calculées. D'autres connexions du bus 5 véhiculent des adresses et des commandes nécessaires pour atteindre et commander le convertisseur 4 ou d'autres périphériques.

Le convertisseur numérique analogique 4 transforme les données binaires présentes à ses entrées en valeurs analogiques. Chaque valeur analogique est maintenue en sortie du convertisseur 4 jusqu'à l'arrivé de la prochaine valeur analogique. On obtient ainsi un signal analogique continu, au moins par morceau, en fonction du temps. Ce signal analogique est envoyé à un haut-parleur 6 par l'intermédiaire d'un amplificateur de puissance 7. Cette conversion par le convertisseur 4 s'effectue à un rythme très rapide de sorte que le signal analogique évolue comme l'amplitude instantanée du signal acoustique. Ce signal analogique représente donc la mélodie de la sonnerie. Dans une variante de mise en oeuvre du procédé de l'invention, cet amplificateur de puissance pourra être à gain variable. Dans ce but une commande de gain lui est appliquée par le microprocesseur 1 par l'intermédiaire du bus 5. Avec un amplificateur à gain variable on peut ainsi obtenir différentes amplitudes crête pour le signal analogique appliqué au haut-parleur 6. En fonction d'une amplitude maximalé choisie le programme de la mémoire 3 détermine quelle loi d'état, ou même de croissance, on doit choisir pour cette amplitude crête.

La figure 2a montre une représentation de l'évolution possible de l'amplitude crête d'un signal acoustique continu selon l'invention. L'amplitude crête du signal acoustique est mesurée en ordonnée. Ce signal acoustique comporte trois phases de fonctionnement successives. Il y a une première phase 8 pendant laquelle, quelle que soit une loi d'état choisie, par l'utilisateur, une progression du signal acoustique présente une faible variation pendant une durée T0 de réaction. Dans un exemple cette durée de réaction est d'environ 0,8 seconde. Cette durée de réaction est supérieure au temps de réaction, moyen, d'un être humain. Cette première phase 8 de fonctionnement correspond à une phase pendant laquelle l'utilisateur n'a pas encore totalement réagi. Ceci revient à dire que l'utilisateur a toujours le téléphone, donc le haut-parleur, à proximité de l'oreille pendant cette phase et qu'il ne l'a plus après. C'est pendant cette phase 8, selon l'invention, que l'amplitude du signal acoustique est la plus faible, donc la plus inoffensive. Ensuite, afin que le signal ait l'amplitude désirée par l'utilisateur une croissance plus rapide devra être effectuée. Ceci détermine une deuxième phase 9 de fonctionnement dans l'évolution du signal acoustique. Après cela on observe une troisième phase 10 de fonctionnement qui est une phase de fonctionnement normal pour le signal de sonnerie. Dans la phase 10 normale l'amplitude crête atteint le niveau d'amplitude choisi par l'utilisateur.

Dans l'invention, la croissance du signal de sonnerie, pour atteindre un niveau choisi a donc une durée, phase 8 et phase 9, plus longue que la durée nécessaire, phase 8, pour que la réaction humaine s'exerce.

Le signal de sonnerie débute de préférence à un niveau 11 qui correspond à un seuil minimum d'audibilité. Ce seuil minimum correspond au seuil qu'une oreille moyenne d'une personne moyenne est capable d'entendre. Ce seuil est donc normalement inoffensif puisqu'il s'agit du seuil minimum. Pendant la phase 8, au début de la sonnerie, le signal aurait tout aussi bien pu démarrer à partir d'une amplitude nulle. Dans ce cas cependant, toute la partie de la durée de la phase 8 située entre le début de la sonnerie et le moment où cette sonnerie aurait atteint le seuil minimum n'aurait aucune utilité physiologique. Elle ne ferait que retarder le phénomène.

La durée de la phase 8 est telle qu'elle doit laisser le temps à un utilisateur avec des capacités moyennes de prendre conscience de la sonnerie et d'éloigner le téléphone de son oreille. A la fin de la phase 8 le signal acoustique possède une amplitude 12 qui correspond sensiblement à un seuil de douleur. Ce seuil de douleur est défini comme étant le seuil à partir duquel l'oreille commence à être incommodée par le niveau sonore. Lorsque l'on arrive à ce seuil, normalement le téléphone doit être à une distance suffisamment lointaine de l'oreille afin que ce niveau soit inoffensif pour l'oreille.

A partir de la fin de la phase 8, le signal peut croître plus rapidement afin de rejoindre un niveau d'amplitude du signal acoustique choisi par l'utilisateur. C'est ce qui se passe durant la phase 9 qui vient succéder à la phase 8. Ainsi pendant cette phase 9, la croissance du signal se fait avec une variation éventuellement plus rapide que pendant la phase 8. La durée de cette phase 9 est d'environ de 0,2 seconde dans un exemple préféré. Après cette phase 9 on se trouve dans une phase 10 de fonctionnement normal du téléphone mobile dans le cas d'une sonnerie. Pendant cette phase 10 l'amplitude du signal acoustique peut ne subir ni croissance ni décroissance. Il reste constant.

On peut noter que pendant la phase 9 la pente de la croissance du signal acoustique sera différente selon le niveau choisi à atteindre. En effet, plus le niveau choisi sera haut plus la pente sera grande.

Dans un exemple préféré, la phase 8 est une phase pendant laquelle le signal est croissant en suivant une loi linéaire. De même pendant la phase 9 le signal pourra aussi suivre une loi linéaire pour sa croissance. D'autres lois de progression peuvent être utilisées telle qu'une loi parabolique. En effet, on admet qu'une loi parabolique présente deux phases de fonctionnement : une première de pente très faible et une seconde de pente beaucoup plus raide. Ce qui correspond au fonctionnement désiré. Au départ le signal peut avoir une amplitude comprise entre une amplitude nulle et une amplitude égale à une amplitude correspondant au seuil de douleur. Dans la variation par morceau envisagée plus haut, la croissance pourra donc être linéaire et/ou parabolique par morceau.

De préférence, le signal partira du niveau 11 qui correspond au seuil d'audibilité. En effet, un niveau inférieur ne serait pas entendu tandis qu'un niveau supérieur pourrait être gênant pour l'oreille de l'utilisateur.

Le graphique de la figure 2b représente une variation de l'éloignement du téléphone mobile par rapport à l'oreille. L'éloignement est mesuré en ordonnée. Cet éloignement est nul au départ du signal de sonnerie jusqu'à un temps environ égal à 0,5 secondes qui correspond au temps nécessaire avant qu'un être humain moyen réagisse à un quelconque stimulus. Puis la courbe devient différente de zéro et croît de manière plus ou moins rapide selon les réflexes de l'utilisateur. Plus la croissance de cette fonction est faible et plus elle traduit un éloignement lent. Ainsi, il y a un nombre important de croissances différentes qui peuvent exister. On est donc amené à définir un cône d'acceptance 13 borné par la croissance la plus rapide à gauche et par la croissance la plus lente à droite. La croissance la plus rapide correspond à un utilisateur doté de bons réflexes, tandis que la croissance la plus lente correspond le plus souvent à un utilisateur âgé.

L'éloignement croît jusqu'à dépasser une valeur de seuil 14, d'environ une trentaine de centimètres, qui correspond à une distance à laquelle l'oreille est en sécurité vis-à-vis de l'amplitude du signal de sonnerie. La durée de la phase 8 est telle que, quelle que soit la croissance appartenant au cône d'acceptance 13, on a dépassé le seuil 14 avant la fin de la phase 8.

Ainsi le signal de sonnerie pendant la phase 8 débute avec une amplitude 11 égale au seuil d'audibilité afin de stimuler une réaction chez l'utilisateur. Cette réaction est l'éloignement du téléphone de l'oreille de l'utilisateur. C'est l'envoi de ce stimulus qui permet d'avoir une réaction efficace. En effet, si le signal avait débuté avec une amplitude inférieure à l'amplitude 11, qui correspond au seuil d'audibilité, la réaction aurait été retardée d'un temps égal à celui qu'il faudrait attendre pour que le signal dépasse le seuil d'audibilité 11. Ainsi dans le cas d'un utilisateur avec des réflexes plutôt lents, le seuil 14 de protection ne sera atteint que dans la phase 9 au plus tard. C'est-à-dire à un instant où le niveau commence à être très proche ou égal à son niveau final. C'est pourquoi la solution qui consiste à faire démarrer la phase 8 à un niveau inférieur au seuil 11 est envisageable mais moins efficace que celle qui consiste à faire démarrer la phase 8 à un niveau supérieur ou égal à 11. Cela revient à stimuler la réaction que l'utilisateur aurait si le signal acoustique, avec l'amplitude crête qu'il aurait choisie, lui était directement appliqué. Mais, avec l'invention, cette stimulation se fait à un niveau plus faible.

Dans l'exemple précédent le seuil 12 de douleur choisi, et pris pour référence, est le même pour tous les niveaux d'amplitude crête du signal acoustique choisi par l'utilisateur. Dans un exemple on prévoit quatre niveaux d'amplitude crête pour la phase 10. Ces niveaux 11, 17, 18, et 19 sont de valeur croissante. En fait, dans l'invention, ce seuil 12 est différent pour chaque niveau choisi. Ceci permet d'avoir un procédé de sonnerie plus efficace, si on prend pour hypothèse qu'un utilisateur sélectionne parmi ces niveaux 11 et 17 à 19 l'amplitude du signal acoustique selon ses capacités auditives. En effet un utilisateur qui choisirait le niveau maximal d'amplitude du signal de sonnerie 19 aura de fortes chances d'avoir une résistance à une contrainte acoustique plus élevée qu'une personne qui choisirait le niveau minimal 11 d'amplitude de signal de sonnerie. Ainsi la croissance du signal, pendant la phase 8, pourra être plus rapide pour un signal d'amplitude finale 19 que pour un signal d'amplitude final 17.

Ainsi à chaque niveau d'amplitude crête du signal acoustique correspond une loi de progression qui lui est propre. Donc, au signal d'amplitude crête 19 du signal acoustique correspondrait un seuil d'amplitude crête 15 de départ du signal de sonnerie. Le seuil 15 est intermédiaire entre le niveau 11 et le seuil 12. A la fin de la phase 8 le signal de sonnerie aura une amplitude crête 12 correspondant au seuil de douleur précédemment défini. Au signal d'amplitude crête 18 du signal acoustique, d'amplitude crête inférieure à celle du signal 19, correspond un seuil 16 d'amplitude crête de départ du signal de sonnerie inférieure au seuil 15. A la fin de la phase 8 le signal de sonnerie pourra avoir dans ce cas une amplitude crête 15. Au signal d'amplitude crête 17, d'amplitude crête inférieure à celle du signal 18, correspond un seuil 11 d'amplitude crête inférieure au seuil 15 de départ du signal de sonnerie. A la fin de la phase 8 le signal de sonnerie pourra avoir dans ce cas une amplitude 16. Si on rajoute un signal d'amplitude crête supérieure à l'amplitude crête 19, on rajoutera donc un seuil d'amplitude crête de départ du signal de sonnerie supérieur ou égal au seuil 12. Si le signal acoustique choisi est d'amplitude crête 11, alors on pourra ne pas lui affecter une croissance selon l'invention puisque cette amplitude a été définie comme inoffensive.

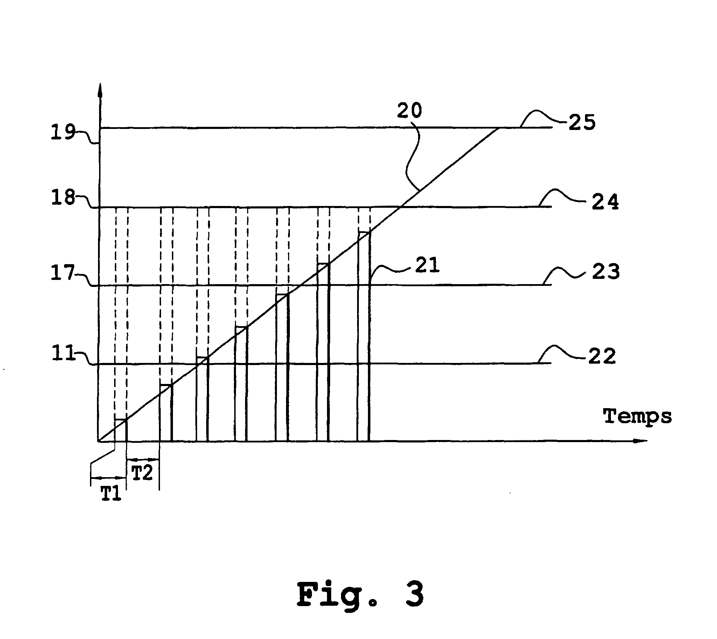

La figure 3 montre cinq représentations de l'évolution de l'amplitude crête du signal acoustique applicable pendant la période 10. Parmi ces cinq représentations, quatre représentations 22, 23, 24, et 25 possèdent des niveaux d'amplitudes crêtes constants. Ces niveaux d'amplitudes crêtes constants 11, 17, 18, et 19, respectivement, traduisent une évolution nulle au cours du temps, du début à la fin de la sonnerie, de l'amplitude crête du signal acoustique. La cinquième représentation 20 présente une croissance régulière à partir du début de la sonnerie et ce jusqu'à ce qu'elle atteigne le niveau d'amplitude crête 19. Une fois arrivé à ce niveau d'amplitude crête 19, l'amplitude crête du signal évolue comme la représentation 25. Dans l'exemple de la figure 3, l'amplitude crête du signal acoustique 21 croît de manière progressive selon la représentation 20. Ce signal de sonnerie 21 est constitué d'impulsions d'un signal acoustique continu de durée T1. Deux impulsions successives sont espacées d'un silence humainement mesurable d'une durée T2. En comparant les figures 2a et 3 on constate que, dans la figure 2a, pendant l'application d'une impulsion d'un signal acoustique continu de durée T1 identique à la durée T1 définie ci-dessus, le niveau de l'amplitude crête de ce signal acoustique, évolue pendant la première impulsion (qui peut durer environ deux secondes). Pendant les autres impulsions, le niveau de l'amplitude crête est maintenu à un niveau constant. Par opposition dans la figure 3, d'une impulsion à l'autre, le signal acoustique est discontinu, il y a des silences. En plus selon une évolution 20, d'une impulsion à l'autre le niveau d'amplitude crête croît.

Les durées T1 et T2 permettent de fixer le rythme de la sonnerie. Plusieurs configurations des durées T1 et T2 existent telle que par exemple, T1 égale à 1,5 seconde et T2 égale à 3,5 secondes.

En variante à la modulation de l'amplitude crête du signal acoustique par la modulation du gain de l'amplificateur 7 à gain variable, on peut prévoir d'utiliser un amplificateur 7 à gain fixe. Dans ce cas, le programme de la mémoire 3 comportera des moyens de calcul pour que l'expression binaire véhiculée par le bus 5 et convertie par le convertisseur 4 représente des valeurs croissantes. Elles croîtront, pendant la première impulsion T1, figure 2a, comme la croissance proposée, avec ses phases 8, 9 et 10. Dans ce cas on synthétise des signaux représentatifs de l'amplification.

## Revendications

1. Procédé de sonnerie d'un téléphone mobile comportant les étapes suivantes :
- on synthétise, à partir d'une suite d'informations, un signal analogique,
- on transforme le signal analogique en un signal acoustique continu de sonnerie,
**caractérisé en ce que**
- on fait croître, à partir d'un seuil (11) d'audibilité, une amplitude du signal acoustique continu pendant une durée de croissance (8, 9) plus longue qu'une durée (8) de réaction humaine.

2. Procédé selon la revendication 1, **caractérisé en ce que**
- on diffuse acoustiquement la sonnerie avec le haut-parleur (6) du téléphone mobile.

3. Procédé selon l'une des revendications 1 à 2, **caractérisé en ce que**
- la durée de croissance est supérieure ou égale à 0,5 seconde.

4. Procédé selon l'une des revendications 1 à 3, **caractérisé en ce que**
- la durée de croissance (8, 9) est d'environ une seconde.

5. Procédé selon l'une des revendications 1 à 4 **caractérisé en ce que**
- pendant la croissance, l'amplitude du signal acoustique continu varie selon une loi linéaire.

6. Procédé selon l'une des revendications 1 à 4 **caractérisé en ce que**
- pendant la croissance l'amplitude du signal acoustique varie selon une loi parabolique.

7. Procédé selon l'une des revendications 1 à 6 **caractérisé en ce que**
- pendant la croissance l'amplitude du signal acoustique varie selon une loi linéaire par morceau et ou parabolique par morceau.

8. Procédé selon l'une des revendications 1 à 7 **caractérisé en ce que**
- on fait croître l'amplitude crête du signal acoustique jusqu'à une amplitude crête qui dépend d'un pré-réglage d'écoute du téléphone mobile (11, 17, 18, 19).

9. Procédé selon l'une des revendications 1 à 8 **caractérisé en ce que**
- pour l'amplification on amplifie les signaux analogiques.

10. Procédé selon l'une des revendications 1 à 8 **caractérisé en ce que**
- pour l'amplification on synthétise des signaux numériques amplifiés.

## Claims

1. A mobile telephone ringing method comprising the following steps:
- an analog signal is synthesized from an information sequence,
- the analog signal is transformed into a continuous acoustic ringing signal,
**characterized in that**
- an amplitude of the continuous acoustic signal is caused to increase from an audibility threshold (11) during an increase duration (8, 9) that is longer than a human reaction duration (8).

2. The method according to claim 1, **characterized in that**
- the ringing is acoustically broadcast with the speaker (6) of the mobile telephone.

3. The method according to one of claims 1 to 2, **characterized in that**
- the increase duration is equal to or greater than 0.5 seconds.

4. The method according to one of clams 1 to 3, **characterized in that**
- the increase duration (8, 9) is approximately one second.

5. The method according to one of claims 1 to 4 **characterized in that**
- during the increase, the amplitude of the continuous acoustic signal varies according to a linear law.

6. The method according to one of claims 1 to 4 **characterized in that**
- during the increase, the amplitude of the acoustic signal varies according to a parabolic law.

7. The method according to one of claims 1 to 6 **characterized in that**
- during the increase, the amplitude of the acoustic signal varies according to a linear law by bit and or a parabolic law by bit.

8. The method according to one of claims 1 to 7 **characterized in that**
- the peak amplitude of the acoustic signal is caused to increase to a peak amplitude that depends on a listening pre-adjustment of the mobile telephone (11, 17, 18, 19).

9. The method according to one of claims 1 to 8 **characterized in that**
- for amplification, the analog signals are amplified.

10. The method according to one of claims 1 to 8 **characterized in that**
- for amplification, the amplified digital signals are synthesized.

## Patentansprüche

1. Läutverfahren eines Mobiltelefons, umfassend die folgenden Schritte:
- Synthetisieren eines Analogsignals aus einer Informationsfolge,
- Umformen des Analogsignals in ein kontinuierliches akustisches Läutsignal,
**dadurch gekennzeichnet, dass**
- Steigern einer Amplitude des kontinuierlichen akustischen Signals ausgehend von einer Hörbarkeitsschwelle (11) während einer Steigerungsdauer (8, 9), die länger als eine menschliche Reaktionszeit (8) ist.

2. Verfahren nach Anspruch 1, **dadurch gekennzeichnet, dass**
- das Läuten akustisch mit dem Lautsprecher (6) des Mobiltelefons verbreitet wird.

3. Verfahren nach einem der Ansprüche 1 bis 2, **dadurch gekennzeichnet, dass**
- die Steigerungsdauer größer oder gleich 0,5 Sekunden ist.

4. Verfahren nach einem der Ansprüche 1 bis 3, **dadurch gekennzeichnet, dass**
- die Steigerungsdauer (8, 9) ungefähr eine Sekunde beträgt.

5. Verfahren nach einem der Ansprüche 1 bis 4, **dadurch gekennzeichnet, dass**
- während der Steigerung die Amplitude des kontinuierlichen akustischen Signals nach einem linearen Gesetz variiert.

6. Verfahren nach einem der Ansprüche 1 bis 4, **dadurch gekennzeichnet, dass**
- während der Steigerung die Amplitude des akustischen Signals nach einem parabelförmigen Gesetz variiert.

7. Verfahren nach einem der Ansprüche 1 bis 6, **dadurch gekennzeichnet, dass**
- während der Steigerung die Amplitude des akustischen Signals nach einem linearen Gesetz pro Abschnitt und/oder einem parabelförmigen Gesetz pro Abschnitt variiert.

8. Verfahren nach einem der Ansprüche 1 bis 7, **dadurch gekennzeichnet, dass**
- die Spitzenamplitude des akustischen Signals bis auf eine Spitzenamplitude gesteigert wird, die von einer Vorhöreinstellung des Mobiltelefons (11, 17, 18, 19) abhängt.

9. Verfahren nach einem der Ansprüche 1 bis 8, **dadurch gekennzeichnet, dass**
- für die Verstärkung die Analogsignale verstärkt werden.

10. Verfahren nach einem der Ansprüche 1 bis 8, **dadurch gekennzeichnet, dass**
- für die Verstärkung verstärkte digitale Signale synthetisiert werden.
